# EUROPÄISCHE PATENTSCHRIFT

(11) **EP 3 579 580 B1**
(45) Veröffentlichungstag und Bekanntmachung des Hinweises auf die Patenterteilung: **30.03.2022**
(21) Anmeldenummer: 19174577.7
(22) Anmeldetag: 15.05.2019
(51) Int. Cl.: H04R 25/00

(54) **VERFAHREN ZUR HERSTELLUNG EINER KOMPONENTE EINES HÖRGERÄTS**
METHOD FOR PRODUCING A COMPONENT OF A HEARING AID
PROCÉDÉ DE FABRICATION D'UN COMPOSANT D'UN APPAREIL AUDITIF

(30) Priorität: 08.06.2018 DE 102018209173
(43) Veröffentlichungstag der Anmeldung: 11.12.2019
(73) Patentinhaber: Sivantos Pte. Ltd., Singapore 539775 (SG)
(72) Erfinder: BREITENFELD, Patrick, 32105 Bad Sulzuflen (DE); BULK, Michael, 32051 Herford (DE)
(74) Vertreter: FDST Patentanwälte

(56) Entgegenhaltungen:
- EP-A1- 1 385 355
- EP-A1- 1 629 802
- EP-B1- 2 335 426
- WO-A1-2014/108200
- US-A1- 2006 042 868
- US-A1- 2012 243 701

## Beschreibung

Die Erfindung betrifft ein Verfahren zur Herstellung einer Komponente eines Hörgerätes, wobei ein erster Wert für eine Materialeigenschaft wenigstens eines ersten abgegrenzten Bereiches der Komponente festgelegt wird, und wobei die Komponente derart gefertigt wird, dass für den wenigstens ersten abgegrenzten Bereich der gefertigten Komponente die Materialeigenschaft den ersten Wert aufweist.

Hörgeräte sind üblichermaßen derart ausgestaltet, dass beim Tragen des Hörgerätes eine Komponente den Gehörgang des Trägers ganz oder wenigstens teilweise verschließt, um somit einerseits das Gehör des Trägers besser gegen unerwünschte Störgeräusche abschirmen zu können, und andererseits das Auftreten einer akustischen Rückkopplung vom im Gehörgang des Trägers propagieren Ausgangsschall des Hörgerätes zurück zu einem Mikrofon des Hörgerätes zu unterdrücken. Je nach Gerätetyp kann es sich bei der den Gehörgang verschließenden Komponente um eine entsprechend protrudierende Verlängerung des Gehäuses handeln (zum Beispiel bei ITE-Geräten), oder aber um eine Otoplastik, welche am Ende eines Schallschlauches sitzt, der von einem im Gehäuse des Hörgerätes angeordneten Lautsprecher den erzeugten Schall zum Gehör des Trägers führen soll (BTE-Geräte).

Der richtige Sitz der Komponente im Gehörgang des Trägers ist hierbei einerseits wichtig für den Tragekomfort, wobei beispielsweise starke Druckstellen im Gehörgang durch die ansitzende Komponente bevorzugt zu vermeiden sind. Andererseits ist eine korrekte mechanische Anpassung der Komponente an den Gehörgang auch von akustischer Relevanz, sei es zur Unterdrückung der bereits erwähnten akustischen Rückkopplung, oder auch für eine korrekte Übertragung des vom Hörgerät erzeugten Ausgangsschalls an das Gehör des Trägers.

Für eine höhere Anpassungsfähigkeit können die zum Tragen im Gehörgang vorgesehenen Komponenten des Hörgerätes - also Otoplastik oder Gehäuse-Schale - in ihrer Elastizität an die entsprechende Anforderung angepasst werden, und bisweilen auch über die gesamte Komponente hinweg verschiedene Elastizitäten aufweisen. Die Auswahl der für einen gegebenen Träger geeigneten Elastizitätsverteilung der besagten Komponente kann hierbei durch einen Hörgeräte-Akustiker vorgenommen werden. Jedoch existieren für diese Auswahl keinerlei verbindliche objektive Kriterien. Der Hörgeräte-Akustiker ist hierbei üblicherweise auf seine professionelle Erfahrung gestützt, welche er mit Hörgeräte-Trägern gemacht hat, die einen vergleichbaren Hörverlust, eine vergleichbare Form der Ohrmuschel oder sonstige vergleichbare Merkmale hinsichtlich des Ohres und des Gehörs aufweisen.

Aufgrund des Fehlens objektiver Kriterien insbesondere für die Auswahl der Elastizität der im Ohr zu tragenden Komponente besteht hierbei immer ein Risiko, dass der Hörgeräte-Akustiker eine Auswahl trifft, welche für den Träger nicht zufriedenstellend ist. In diesem Fall muss eine neue Komponente bereitgestellt werden und gegebenenfalls anprobiert werden, was zum einen Kosten und zum anderen den Träger auch ungewünschte Verzögerungen bis zu einem ordnungsgemäß möglichen Gebrauch seines Hörgerätes verursacht.

Die US 2006 / 0 042 868 A1 nennt einen Ohrstöpsel zum Gehörschutz, welcher anhand von Daten eines Scans des Gehörgangs, in welchem der Ohrstöpsel Anwendung finden soll, mittels eines 3D-Druckverfahrens erstellt wird. Die EP 1 629 802 A1 nennt ein solches Herstellungsverfahren für einen ähnlichen Gehörschutz-Ohrstöpsel, welcher überdies noch einen schaltbaren Schallkanal für die Möglichkeit einer ungedämpften Kommunikation aufweist.

Die WO 2014 / 108 200 A1 offenbart ein zweilagiges Gehäuse für ein Hörgerät. Eine innere Lage wird hierbei durch eine harte Schale gebildet, welche in einem generativen Verfahren hergestellt wird, und welche von einer thermoplastisch geformten Hüll als zweiter Lage des Gehäuses umgeben ist. Die harte Schale weist seitliche Öffnungen auf, welche von der thermoplastisch geformten Hülle überzogen sind, um im Bereich der Öffnungen eine höhere Flexibilität zu erreichen.

Der Erfindung liegt daher die Aufgabe zugrunde, ein Verfahren zur Herstellung einer Komponente eines Hörgerätes anzugeben, welche für einen Träger des Hörgerätes einen besonders hohen Tragekomfort bei möglichst einfacher Fertigung bieten soll.

Die genannte Aufgabe wird erfindungsgemäß gelöst durch ein Verfahren zur Herstellung einer Komponente eines Hörgerätes, wobei zumindest ein Gehörgang eines für das Hörgerät vorgesehenen Trägers vermessen wird und hierbei Vermessungsdaten des Gehörgangs erzeugt werden, wobei anhand der Vermessungsdaten ein erster Wert für eine Materialeigenschaft wenigstens eines ersten abgegrenzten Bereiches der Komponente festgelegt wird, und wobei die Komponente derart gefertigt wird, dass für den wenigstens ersten abgegrenzten Bereich der gefertigten Komponente die Materialeigenschaft den ersten Wert aufweist. Vorteilhafte und teils für sich gesehen erfinderische Ausgestaltungen sind Gegenstand der Unteransprüche und der nachfolgenden Beschreibung.

Bevorzugt wird hierbei als Komponente des Hörgerätes eine solche Komponente hergestellt, welche bei einem bestimmungsgemäßen Gebrauch des Hörgerätes durch ein entsprechendes Einsetzen für einen Verschluss oder einen wenigstens teilweisen Verschluss des Gehörgangs des Trägers vorgesehen ist. Insbesondere kann es sich also bei der Komponente um eine Gehäuse-Schale des Hörgerätes oder eine Otoplastik oder ein Ohrpassstück ("dome") handeln. Das Vermessen des Gehörgangs eines für das Hörgerät vorgesehenen Trägers umfasst hierbei insbesondere, dass hierdurch die betreffende Komponente eines noch nicht abschließend gefertigten Hörgerätes an einen bestimmten Träger bzw. an dessen Gehörgang individuell angepasst wird.

Das Vermessen zumindest des Gehörgangs erfolgt hierbei bevorzugt derart, dass die Vermessungsdaten ein dreidimensionales Modell des Gehörgangs und bevorzugt auch des Eingangs des Gehörgangs bis wenigstens zu der Tiefe liefern, bis zu der die herzustellende Komponente bei einem bestimmungsgemäßen Gebrauch des Hörgerätes in den Gehörgang einzuführen ist. Protrudiert beispielsweise die Komponente beim sachgemäßen Tragen des Hörgerätes, gemessen vom Eingang des Gehörgangs, 5 mm in diesem hinein, so liefern die Vermessungsdaten ein dreidimensionales Modell des Gehörgangs bevorzugt bis mindestens 5 Millimeter Tiefe, besonders bevorzugt noch bis wenigstens den halben Durchmesser des Gehörgangs tiefer. Bevorzugt werden hierbei auch an den Gehörgang außen angrenzende Teile der Concha mit abgebildet. Insbesondere liegen die Vermessungsdaten in einem für eine Weiterverarbeitung standardisierten Format vor, also beispielsweise als Volumenelemente ("Voxel") mit einer entsprechenden Information, ob am betreffenden Volumenelement Körpergewebe vorliegt, oder ob das Volumenelement zum Gehörgang zugehörig ist. Bevorzugt werden auch an den Gehörgang angrenzende Strukturen, wie z.B. eine Concha, von der Vermessung mit erfasst, und somit in den Vermessungsdaten repräsentiert.

Als Materialeigenschaft ist hierbei ein Elastizitätsmodul ("E-Modul") gegeben, welcher eine Reaktion der Komponente auf mechanische Belastungen beschreibt. Der "E-Modul" kann hierbei explizit als ein Zahlwert vorgegeben werden, oder implizit über einen Wert einer anderen Materialeigenschaft, welche, ggf. in Kombination mit einer gewünschten Form der Komponente, den E-Modul unmittelbar beeinflusst, also beispielsweise über einen Wert der Steifigkeit oder einer Zugfestigkeit.

Unter einem Festlegen eines ersten Wertes für eine Materialeigenschaft wenigstens des ersten abgegrenzten Bereiches der Komponente ist insbesondere umfasst, dass dabei der erste Wert für die Materialeigenschaft auch implizit über eine Auswahl eines Materials für den ersten abgegrenzten Bereich aus einer Mehrzahl an Möglichkeiten für das Material mit jeweils unterschiedlichen Werten für die besagte Materialeigenschaft erfolgen kann. Ebenfalls unter der Festlegung des ersten Wertes für die Materialeigenschaft umfasst ist hierbei eine implizite Festlegung derart, dass in einem Fertigungsverfahren für wenigstens den ersten abgegrenzten Bereich der Wert für die Materialeigenschaft von einem einstellbaren Parameter des Fertigungsverfahrens abhängt, wobei die Festlegung in diesem Fall durch das Auswählen eines konkreten Wertes für den einstellbaren Parameter erfolgt, welcher im Fertigungsverfahren für wenigstens den ersten abgegrenzten Bereich zum ersten Wert für die Materialeigenschaft führt.

Mit anderen Worten existiert also im Fertigungsverfahren für den ersten abgegrenzten Bereich ein einstellbarer Parameter, über welchen kontrolliert die Materialeigenschaft des ersten abgegrenzten Bereiches beeinflusst werden kann. Somit entspricht das Festlegen des ersten Wertes für die Materialeigenschaft einer Auswahl oder einer Vorgabe desjenigen Wertes für den Parameter, durch welchen als Konsequenz des Fertigungsverfahrens der erste abgegrenzte Bereich den ersten Wert für die Materialeigenschaft aufweist. Insofern kann also das Festlegen explizit über eine konkrete Vorgabe des ersten Wertes für die Materialeigenschaft oder implizit über den entsprechenden Parameterwert des Fertigungsverfahrens erfolgen.

Wenigstens der erste abgegrenzte Bereich und insbesondere die Komponente wird bevorzugt mittels eines dahingehend geeigneten Fertigungsverfahrens gefertigt, sodass für den wenigstens ersten abgegrenzten Bereich der gefertigten Komponente die Materialeigenschaft den ersten Wert aufweist. Insbesondere kann dabei für den Fall, dass die Komponente noch einen zweiten abgegrenzten Bereich aufweist, welcher vom ersten abgegrenzten Bereich getrennt ist, die Fertigung der Komponente auch in mehreren Fertigungsschritten erfolgen, wobei bevorzugt jeweils ein einzelner Fertigungsschritt zur Fertigung eines abgegrenzten Bereiches vorgesehen ist. Insbesondere kann sich der erste abgegrenzte Bereich auch über die gesamte Komponente erstrecken, beispielsweise, wenn die Komponente durch ein Ohrpassstück gegeben ist.

Für das Festlegen des ersten Wertes der Materialeigenschaft anhand der Vermessungsdaten werden bevorzugt aus letzteren ersichtliche anatomische Details über die Geometrie des Gehörgangs des vorgesehenen Trägers berücksichtigt.

Insbesondere kann hierbei auch ein Risiko für ein Auftreten einer akustischen Rückkopplung, so wie es aus den Vermessungsdaten entnehmbar ist, mit berücksichtigt werden, beispielsweise im Fall, dass eine Gehäuse-Schale eines Hörgerätes an einer Krümmungsstelle aus Stabilitätsgründen eigentlich eine höhere Festigkeit erfordern würde, jedoch infolge der individuellen Geometrie des Gehörgangs des Trägers und infolge der stärkeren akustischen Reflexionen an härteren Materialien der besagte Bereich gegebenenfalls mit einem weicheren Material zu versehen ist.

Erfindungsgemäß wird als erster Wert für die Materialeigenschaft ein Wert eines E-Moduls festgelegt. Die Elastizität bzw. Steifigkeit von Hörgeräte-Komponenten, welche ganz oder teilweise im Gehörgang zu tragen sind, ist einerseits maßgeblich für einen korrekten Sitz der Komponente im Gehörgang und somit für eine möglichst wie vorgesehen ablaufende Schallübertragung zum Gehör des Trägers. Andererseits ist aufgrund der mehrfachen Krümmung des Gehörgangs sowie der geringen Dicke der Hautschicht an vielen Stellen im Gehörgang eine hinreichend hohe Elastizität der besagten Komponente wichtig für den individuellen Tragekomfort. Vor diesem Hintergrund erweist sich das Verfahren als besonders vorteilhaft.

Besteht beispielsweise die Komponente in einer Gehäuse-Schale eines ITE-Hörgerätes, so kann über eine gezielte Variation des Elastizitätsmoduls entlang der Gehäuse-Schale, also durch eine gezielte Auswahl des ersten abgegrenzten Bereiches anhand der Vermessungsdaten und einer entsprechenden Zuweisung des ersten Wertes für den E-Modul eine erhebliche Verbesserung des Tragekomforts erreicht werden. Das Gehäuse eines ITE-Hörgerätes besteht üblicherweise aus einer Gehäuse-Schale, welche ein abgeflachtes, offenes Ende aufweist, auf das eine sogenannte Faceplate aufgeklebt oder in sonstiger Weise unter Fixierung aufgebracht wird. Für eine gute und dauerhafte Verklebung bzw. Fixierung sind sowohl die Faceplate als auch die Gehäuse-Schale bevorzugt aus einem harten Material gefertigt, um keinerlei Verschiebungen der beiden genannten Teile gegeneinander an ihrer Fuge zu ermöglichen. Bevorzugt besteht ein mittlerer Bereich der Gehäuse-Schale aus einem weicheren Material, da dies oftmals von Trägern eines Hörgerätes als angenehmer empfunden wird. Am für das Tragen im Gehörgang vorgesehenen Ende besteht die Gehäuse-Schale bevorzugt wiederum aus härterem Material, um beispielsweise den Einbau eines Cerumen-Filters und dessen Fixierung zu ermöglichen.

Derzeit ist ein Übergang zwischen hartem und weichem Material für die Gehäuse-Schale nur schwer zu erreichen. Hierfür müsste beispielsweise eine weiche Manschette im vorgesehenen Bereich um die harte Gehäuse-Schale herum fixiert werden. Dies ist einerseits fertigungstechnisch mit einem hohen Aufwand verbunden, andererseits kann oftmals nicht garantiert werden, dass eine solche Manschette einem oftmaligen Einführen und Herausziehen des Hörgerätes in den bzw. aus dem Gehörgang standhält. Demgegenüber schlägt eine Ausgestaltung der Erfindung vor, in der Komponente - vorliegend beispielhaft repräsentiert durch die Gehäuse-Schale - anhand der Vermessungsdaten einen ersten abgegrenzten Bereich und gegebenenfalls noch weitere abgegrenzte Bereiche aufzuteilen, wobei dem ersten abgegrenzten Bereichen anhand der Vermessungsdaten ein bestimmter Wert für den E-Modul zugewiesen wird.

In einem mehrstufigen Fertigungsverfahren, wie es beispielsweise durch ein 3D-Druckverfahren gegeben sein kann, wird nun die Komponente entsprechend der vorgegebenen Werte für den E-Modul gefertigt, also im genannten Beispiel eines 3D-Druckverfahren durch eine Verwendung einer zur Erreichung des Wertes des E-Moduls geeigneten Granulat-Körnungen und/oder -Materialien und/oder eines Energieeintrags für den ersten abgegrenzten Bereich Hierdurch kann erzielt werden, dass der genannte Bereiche in der fertig hergestellten Komponente den gewünschten E-Modul aufweist.

Bevorzugt wird der Gehörgang zur Erzeugung der Vermessungsdaten mit optischen und/oder akustischen Mitteln direkt vermessen. Unter einer direkten Vermessung mit akustischen Mitteln ist insbesondere eine bevorzugt dreidimensionale Ultraschallmessung umfasst. Unter einer direkten Vermessung mit optischen Mitteln sind insbesondere ein bevorzugt dreidimensionaler Leser-Scan sowie eine Röntgenmessung umfasst, welche insbesondere auch tomographisch erfolgen kann. Mit anderen Worten ist unter einer direkten Vermessung also ein Vermessungsvorgang zu verstehen, welche mit den genannten physikalischen Mitteln direkt am Gehörgang des vorgesehenen Trägers durchgeführt wird.

In einer alternativen Ausgestaltung der Erfindung wird zur Erzeugung der Vermessungsdaten ein Abdruck des Gehörgangs erstellt, wobei die Vermessungsdaten anhand des Abdrucks erzeugt werden. Der Abdruck wird dabei bevorzugt mittels eines formbaren Materials erstellt, welches nach einer vorgegebenen Zeitdauer ausgehärtet. Zur Erzeugung der Vermessungsdaten wird der Abdruck insbesondere mit optischen Mitteln vermessen, beispielsweise durch einen dreidimensionalen Laser-Scan.

Insbesondere kann der Gehörgang für eine Mehrzahl an möglichen Zielvorstellungen des Trägers vermessen werden, wobei für eine direkte Vermessung mit optischen und/oder akustischen Mitteln in jeder der gewünschten Kieferstellungen ein eigener Unterdatensatz an Vermessungsdaten erzeugt wird, und im Fall der Vermessung anhand eines Abdrucks für jede der gewünschten Kieferstellungen ein eigener Abdruck erzeugt und entsprechend vermessen wird, und somit jeweils ein Unterdatensatz an Vermessungsdaten erstellt wird. Insbesondere können hierbei räumliche Bereiche im Gehörgang identifiziert werden, deren Geometrie bei einer Variation der Kieferstellungen besonders variiert. Ein entsprechender abgegrenzter Bereich der herzustellenden Komponente, welcher sich bei einem bestimmungsgemäßen Tragen in einem solchen Bereich des Gehörgangs mit besonders variabler Geometrie befindet, kann entsprechend mit einem höheren E-Modul vorgesehen sein und entsprechend gefertigt werden.

Günstigerweise wird zur Festlegung der erste Wert der Materialeigenschaft aus einer Mehrzahl an vorgegebenen Rasterwerten anhand der Vermessungsdaten ausgewertet. Dies umfasst insbesondere, dass bei einer impliziten Festlegung über einen entsprechenden Parameter des Fertigungsverfahrens für wenigstens den ersten abgegrenzten Bereich die Festlegung über eine Auswahl des Parameters aus einer vorgegebenen Gruppe von möglichen Werten erfolgt.

Die Erfindung sieht weiter vor, dass anhand der Vermessungsdaten ein vom ersten Wert verschiedener zweiter Wert für die Materialeigenschaft eines vom ersten abgegrenzten Bereich getrennten zweiten abgegrenzten Bereiches der Komponente festgelegt wird, wobei die Komponente bevorzugt mittels eines entsprechend geeigneten Fertigungsverfahrens derart gefertigt wird, dass für den zweiten abgegrenzten Bereich der gefertigten Komponente die Materialeigenschaft den zweiten Wert aufweist. Insbesondere wird hierbei auch die Geometrie des zweiten abgegrenzten Bereiches anhand der Vermessungsdaten ermittelt. Dies erlaubt eine kontrollierte Variation der Materialeigenschaft über die Komponente hinweg.

Erfindungsgemäß wird für den E-Modul der erste Wert größer als der zweite Wert festgelegt, wobei als erster abgegrenzter Bereich der Komponente ein Bereich gefertigt wird, welcher ein freies Ende der Komponente bildet. Hierdurch kann erreicht werden, dass das freie Ende des ersten abgegrenzten Bereiches eine hohe Festigkeit aufweist, während der zweite abgegrenzte Bereich infolge des geringeren Wertes für den E-Modul weicher konstruiert werden kann, was für diesen Bereich üblicherweise zu einem höheren Tragekomfort beim Träger führt.

Erfindungsgemäß wird dabei als erster abgegrenzter Bereich der Komponente ein Bereich gefertigt, welcher bei einem bestimmungsgemäßen Tragen der Komponente ein im Gehörgang zu tragendes freies Ende bildet, wobei als zweiter abgegrenzter Bereich der Komponente ein Bereich gefertigt wird, welcher bei einem bestimmungsgemäßen Tragen der Komponente durch den ersten abgegrenzten Bereich vom Trommelfell des Trägers beabstandet ist, und somit das freie Ende des ersten abgegrenzten Bereiches zwischen dem Trommelfell und dem zweiten abgegrenzten Bereich liegt, wenn die Komponente bestimmungsgemäß getragen wird. Unter einem bestimmungsgemäßen Tragen der Komponente ist hierbei insbesondere zu verstehen, dass die Komponente vom Träger des zugehörigen Hörgerätes derart am oder wenigstens teilweise im Ohr getragen wird, wie dies für eine Funktionsweise des Hörgerätes vorgesehen und erforderlich ist.

Dies bedeutet, dass das freie Ende, welches den ersten abgegrenzten Bereich bildet, beim bestimmungsgemäßen Tragen in den Gehörgang ragt, und der zweite abgegrenzte Bereich, welcher infolge des geringeren zweiten Wertes für den E-Modul weicher bzw. elastischer gefertigt ist als das besagte freie Ende des ersten abgegrenzten Bereiches, ggf. ebenfalls noch teilweise im Gehörgang getragen werden kann, jedoch weiter außen liegend. Hierdurch kann beim zweiten abgegrenzten Bereich ein angenehmes Tragegefühl im Gehörgang erreicht werden, während das freie Ende, welches durch den ersten abgegrenzten Bereich gebildet wird, eine hinreichen hohe Festigkeit aufweisen kann, um z.B. einen Cerumenfilter o.ä. anzubringen.

Vorteilhafterweise wird anhand der Vermessungsdaten ein vom zweiten Wert verschiedener dritter Wert für den E-Modul eines vom zweiten abgegrenzten Bereich getrennten, dritten abgegrenzten Bereiches der Komponente festgelegt, wobei die Komponente derart gefertigt wird, dass für den dritten abgegrenzten Bereich der gefertigten Komponente der E-Modul den dritten Wert aufweist. Dies erlaubt insbesondere, Den E-Modul über die Komponente hinweg zu variieren.

Bevorzugt wird dabei für den E-Modul der dritte Wert größer als der zweite Wert festgelegt, wobei als dritter abgegrenzter Bereich der Komponente ein Bereich gefertigt wird, welcher ein freies Ende der Komponente bildet. Dies bedeutet, dass die Komponente ein freies Ende als ersten abgegrenzten Bereich, ein weiteres freies Ende als dritten abgegrenzten Bereich, und einen zwischen den freien Enden angeordneten zweiten abgegrenzten Bereich aufweist, wobei die freien Enden eine höhere Festigkeit aufweisen. Der erste abgegrenzte Bereich wird hierbei bevorzugt währenddes bestimmungsgemäßen Tragens im Gehörgang nach innen gerichtet getragen, während der dritte abgegrenzte Bereich vom Gehör des Trägers das nach außen gerichtete freie Ende bildet. Insbesondere kann an dieses freie Ende, das durch den dritten abgegrenzten Bereich gebildet wird, eine Deckplatte - eine sog. "Faceplate" - angebracht werden, bzw. kann der dritte abgegrenzte Bereich eine derartige Deckplatte umfassen. Bevorzugt kann der dritte Wert E3 des E-Moduls identisch zum ersten Wert E1 des E-Moduls festgelegt werden, also E1 = E3.

Erfindungsgemäß werden der erste abgegrenzte Bereich der Komponente und der zweite abgegrenzte Bereich mittels eines 3D-Druckverfahrens unter Berücksichtigung des ersten Wertes und gegebenenfalls des zweiten Wertes für die Materialeigenschaft gefertigt. Die jüngste Entwicklung von 3D-Druckverfahren zeigt, dass es möglich ist, Materialeigenschaften wie beispielsweise einen E-Modul gezielt über eine entsprechende Variation eines Parameters im 3D-Druckverfahren zu steuern, beispielsweise über eine Verwendung eines Ausgangsmaterials, über dessen Körnung und/oder Dichte, oder über einen lokalen Energieeintrag durch den beim 3D-Druckverfahren verwendeten Laser. In speziellen Verfahrenstypen auf dem Gebiet des 3D-Drucks wird dies bereits heute umgesetzt. Durch eine entsprechende Variation des Parameters können somit auch unterschiedliche abgegrenzte Bereiche der Komponente mit jeweils unterschiedlichen Werten für die Materialeigenschaft gefertigt werden.

Dabei werden der erste abgegrenzte Bereich und der zweite abgegrenzte Bereich der Komponente mittels eines 3D-Druckverfahrens einstückig gefertigt werden, wobei der erste Wert bzw. der zweite Wert der Materialeigenschaft für den ersten bzw. den zweiten abgegrenzten Bereich über den entsprechenden Parameter des 3D-Druckverfahrens eingestellt wird. Dies bedeutet, dass während des 3D-Druckverfahrens zunächst ein erster Wert für den Parameter, über welchen die Materialeigenschaften gesteuert wird, ausgewählt wird, welcher zu einem ersten ersten Wert der Materialeigenschaft führt. Hierbei wird nun der erste abgegrenzte Bereich gefertigt. Anschließend wird der Fertigungsprozess im 3D-Druckverfahren hinsichtlich des Parameters variiert, sodass über den nun veränderten Parameter der zweite Wert der Materialeigenschaft angewählt wird. Hierdurch schließt sich fertigungsbedingt der zweite abgegrenzte Bereich nahtlos an den ersten abgegrenzten Bereich an. Insbesondere können auch noch weitere abgegrenzte Bereiche so einstückig miteinander gefertigt werden, dass sämtliche abgegrenzten Bereiche die gesamte Komponente ergeben. Dies erlaubt ein vielfältiges Variationsprofil der Materialeigenschaft über die gesamte Komponente hinweg.

Besonders bevorzugt wird, als Komponente wenigstens ein Teil eines Gehäuses und/oder einer Otoplastik und/oder eines Ohrpassstücks gefertigt. Da besagte Komponenten beim Tragen des Hörgerätes jeweils wenigstens teilweise im Gehörgang Anliegen, und daher die Möglichkeit variabler Materialeigenschaften besonders wünschenswert ist, ist hier das Verfahren zur Herstellung besonders vorteilhaft.

Die Erfindung nennt weiter eine Komponente für ein Hörgerät, welche durch das vorbeschriebene Herstellungsverfahren erhältlich ist. Die Vorteile des Verfahrens und seiner Weiterbildungen können dabei sinngemäß auf die Komponente übertragen werden.

Nachfolgend wird ein Ausführungsbeispiel der Erfindung anhand von Zeichnungen näher erläutert. Hierbei zeigen jeweils schematisch:
- Fig. 1: schematisch in einer Schnittdarstellung ein ITE-Hörgerät mit mehreren Bereichen verschiedener Elastizität, welches in einem Gehörgang getragen wird,
- Fig. 2: schematisch in einer Schnittdarstellung ein BTE-Hörgerät mit einem Ohrpassstück, welches in einem Gehörgang getragen wird, und
- Fig. 3: schematisch in einem Blockdiagramm ein Verfahren zur Herstellung der Hörgeräte nach Fig. 1 und Fig. 2 in Abhängigkeit von der individuellen Anatomie des Gehörgangs.

Einander entsprechende Teile und Größen sind in allen Figuren jeweils mit gleichen Bezugszeichen versehen.

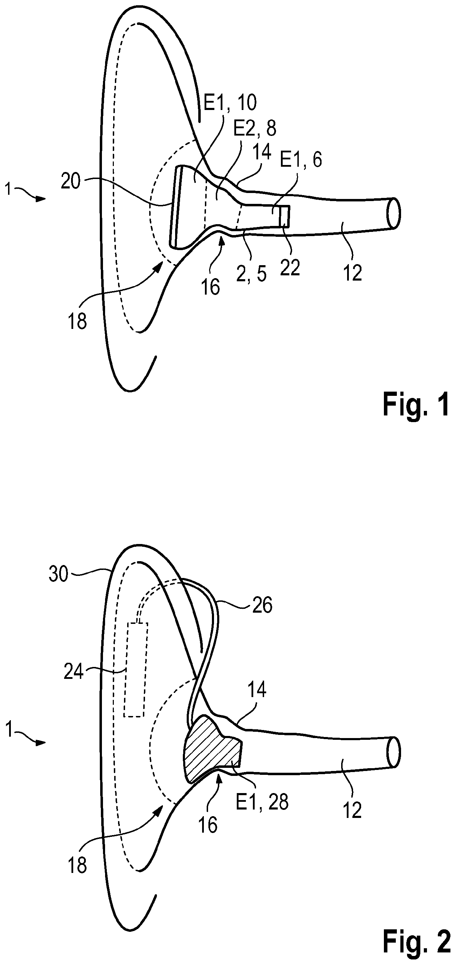

In Fig. 1 ist schematisch in einer Schnittdarstellung ein Ohr 1 eines nicht weiter gezeigten Trägers eines Hörgerätes 2 gezeigt. Das Hörgerät 2 ist hierbei als ein ITE-Gerät ausgestaltet, dessen Gehäuse-Schale 5 einen ersten abgegrenzten Bereich 6, einen zweiten abgegrenzten Bereich 8 und einen dritten abgegrenzten Bereich 10 aufweist. Der relativ schmale erste abgegrenzte Bereich 6 protrudiert hierbei teilweise in den Gehörgang 12 des Trägers. Der zweite abgegrenzte Bereich 8 formt in der Gehäuse-Schale 5eine eine Krümmung, durch welche das Hörgerät 2 um den Eingang 14 des Gehörgangs 12 geführt wird. Der zweite abgegrenzte Bereich liegt hierbei an einer durch eine Knorpelschicht gebildete Hervorhebung 16 im Bereich des Eingangs 14 des Gehörgangs 12 an. Der dritte abgegrenzte Bereich 10, welcher in die Concha 18 des Trägers eingepasst ist, weist für einen besseren Sitz eine Ausweitung auf. Der dritte abgegrenzte Bereich 10 wird von einer Faceplate 20 abgedeckt. Infolge ihrer Abmessungen verschließt die Gehäuse-Schale 5 des Hörgerätes 2 den Gehörgang 12 nahezu vollständig, um den Träger einen besseren Tragekomfort zu bieten.

Der erste abgegrenzte Bereich 6 weist einen E-Modul E1 auf, welcher einer vergleichsweise hohen Festigkeit entspricht, da beim in den Gehörgang 12 protrudierenden Ende, welches durch den ersten abgegrenzten Bereich 6 gebildet wird, ein Cerumenfilter 22 im Hörgerät 2 verbaut ist, und hierfür eine höhere Festigkeit und Steifigkeit vorteilhaft ist. Um insbesondere durch den zweiten abgegrenzten Bereich 8 keinen unangenehmen Druck auf die Hervorhebung 16 auszuüben, weist der zweite abgegrenzte Bereich einen E-Modul E2 < E1 auf, welcher also einer vergleichsweise hohen Elastizität des Materials im zweiten abgegrenzten Bereich 8 entspricht. Hierdurch kann in der Umgebung der Krümmung des Gehörgangs 12 an seinem Eingang 14 der zweite abgegrenzte Bereich 8 sanft im Gehörgang 12 anliegen. Auch der dritte abgegrenzte Bereich weist den E-Modul E1 auf, da die entsprechend hohe Festigkeit für das Verbinden mit der Faceplate 20 vorteilhaft ist. Das Hörgerät 2 mit seinen drei abgegrenzten Bereichen 6, 8, 10 in der Gehäuse-Schale 5 hat hierbei den Vorteil, dass einerseits der erste und der dritte abgegrenzte Bereich 6, 10 die für den Einbau des Cerumenfilters 22 bzw. für die Verbindung mit der Faceplate 20 hinreichende Festigkeit (E-Modul E1) aufweisen, jedoch der zweite abgegrenzte Bereich 8 für eine verbesserten Tragekomfort. Gerade im Bereich der Hervorhebung 16 eine höhere Elastizität (E-Modul E2) aufweist.

In Figur 2 ist schematisch in einer Schnittdarstellung eine alternative Ausgestaltung eines Hörgerätes 2' gezeigt. Das Hörgerät 2' ist hierbei als ein BTE-Gerät ausgebildet. Das Hörgerät 2' weist hierbei ein Gehäuse 24, eine mit dem Gehäuse 24 verbundenen Schallschlauch 26 sowie ein am anderen Ende des Schallschlauches 26 angebrachtes Ohrpassstück 28 auf. Das Gehäuse 24 wird im vorliegenden Fall hinter der Pinna 30 des Ohres 1 getragen, wobei ein im Gehäuse 24 erzeugter Ausgangsschall des Hörgerätes 2' durch den Schallschlauch 26 zum Ohrpassstück 28 geführt wird. Das Ohrpassstück 28 liegt dabei in der Concha 18 an, protrudiert jedoch im Bereich der Hervorhebung 16 noch in den Eingang 14 des Gehörgangs. Für einen stabilen Sitz des Ohrpassstücks 28 ist dieses aus einem Material mit einer vergleichsweise hohen Elastizität (E-Modul E1) gefertigt, damit sich das Ohrpassstück 28 besser an die Concha 18 und den Eingang 14 des Gehörgangs 12 anpassen kann.

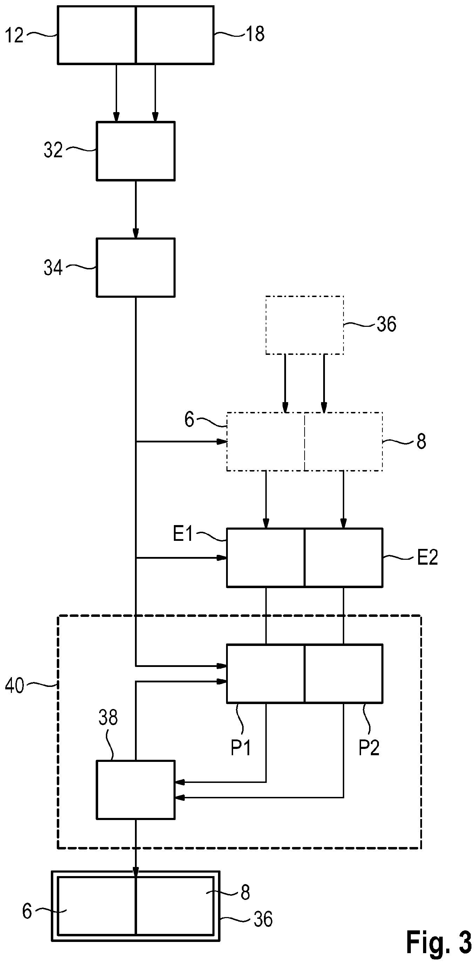

In Figur 3 ist schematisch in einem Blockdiagramm ein Verfahren zur Herstellung des Hörgerätes 2 bzw. 2' nach Figur 1 bzw. Figur 2 gezeigt. Zunächst findet eine Vermessung 32 des Gehörgangs 12 und des umgebenden Bereiches mit der Concha 18 statt. Diese Vermessung kann einerseits durch einen direkten Scan mittels Ultraschall oder Laser, oder aber anhand eines Abdrucks des zu vermessenden Bereiches von Gehörgang 12 und Concha 18 und eines anschließenden Laser-Scans des Abdrucks erfolgen. Bei der Vermessung 32 werden Vermessungsdaten 34 über den Gehörgang und die angrenzende Concha 18 generiert, beispielsweise in der Form von Voxel-weise erfolgender Information über ein Vorliegen von Körpergewebe einerseits oder Luft andererseits. Anhand dieser Vermessungsdaten 34 werden nun zunächst für eine Komponente 36, welche beispielsweise durch die Gehäuse-Schale 5 des Hörgerätes 2 nach Fig. 1 oder durch das Ohrpassstück 28 des Hörgerätes 2' nach Fig. 2 gegeben sein kann, wenigstens ein erster abgegrenzter Bereich 6 und ein zweiter abgegrenzter Bereich 8 und ggf. noch weitere abgegrenzte Bereiche in der Komponente ermittelt, welche vorzugsweise unterschiedliche Festigkeiten bzw. unterschiedliche Elastizitäten aufzuweisen haben.

Nach Ermitteln des ersten und des zweiten abgegrenzten Bereiches 6, 8 sowie ggf. noch weiterer abgegrenzter Bereiche wird anhand der Vermessungsdaten 34 für jeden abgegrenzten Bereich 6, 8 ein E-Modul E1 bzw. E2 festgelegt. Für ein 3D-Durckverfahren 38 zur Fertigung wird nun ermittelt, anhand welcher Parameterwerte P1 bzw. P2 des 3D-Druckverfahrens 38 sich der jeweils gewünschte E-Modul E1 bzw. E2 einstellen lässt. Die Parameterwerte P1, P2 können hierbei beispielsweise Werte für einen lokalen Energieeintrag durch einen Laser im 3D-Druckverfahren 38 sein, oder eine Schüttdichte oder Kornung für ein im 3D-Druckverfahren 38 verwendetes Granulates eines Ausgangsmaterials. Insbesondere können die Parameterwerte P1 und P2, welche im 3D-Druckverfahren zu einem fertigen Material mit E-Modul E1 bzw. E2 führen, jeweils auch mehrere Einzelvariablen der genannten Art beschreiben, und somit vektorwertig sein.

Anschließend wird durch das 3D-Druckverfahren 38 unter Einstellung des Parameterwertes P1 zunächst der erste abgegrenzte Bereich 6 der Komponente 36 gedruckt. Daraufhin werden im 3D-Drucker 40 die Einstellungen derart verändert, dass nun der Parameterwert P2 vorliegt, also beispielsweise durch eine Veränderung der Voreinstellungen für einen Laser des 3D-Druckers, welcher das Granulat des Ausgangsmaterials verarbeitet, oder durch einen Austausch des Granulates gegen ein solches mit entsprechend anderer Beschaffenheit. Daraufhin wird einstückig mit dem ersten abgegrenzten Bereich 6 nun der zweite abgegrenzte Bereich 8 der Komponente 36 gedruckt. Soll die Komponente 36 noch weitere abgegrenzte Bereiche aufweisen, wodurch jeweils eine erneute Änderung des E-Moduls entlang der Komponente 36 vorgesehen ist, so können die Parameterwerte des 3D-Druuckverfahrens 38 entsprechend angepasst werden, und der Druck jeweils mit neuen, den gewünschten E-Modul bedingenden Parameterwerten weitergeführt werden, bis die Komponente 36 fertig gedruckt ist.

Obwohl die Erfindung im Detail durch das bevorzugte Ausführungsbeispiel näher illustriert und beschrieben wurde, ist die Erfindung nicht durch dieses Ausführungsbeispiel eingeschränkt. Andere Variationen können vom Fachmann hieraus abgeleitet werden, ohne den Schutzumfang der Erfindung zu verlassen.

### Bezugszeichenliste

- 1: Ohr
- 2: Hörgerät
- 5: Gehäuse-Schale
- 6: erster abgegrenzter Bereich
- 8: zweiter abgegrenzter Bereich
- 10: dritter abgegrenzter Bereich
- 12: Gehörgang
- 14: Eingang
- 16: Hervorhebung
- 18: Concha
- 20: Faceplate
- 22: Cerumenfilter
- 24: Gehäuse
- 26: Schallschlauch
- 28: Ohrpassstück
- 30: Pinna
- 32: Vermessung
- 34: Vermessungsdaten
- 36: Komponente
- 38: 3D-Druckverfahren
- 40: 3D-Drucker

- E1, E2: E-Modul
- P1, P2: Parameterwerte

## Patentansprüche

1. Verfahren zur Herstellung einer Komponente (36) eines Hörgerätes (2, 2'),
wobei zumindest ein Gehörgang (12) eines für das Hörgerät (2, 2') vorgesehenen Trägers vermessen wird und hierbei Vermessungsdaten (34) des Gehörgangs (12) erzeugt werden,
wobei anhand der Vermessungsdaten (34) ein erster Wert (E1) für eine Materialeigenschaft wenigstens eines ersten abgegrenzten Bereiches (6) der Komponente (36) festgelegt wird,
wobei anhand der Vermessungsdaten (34) ein vom ersten Wert (E1) verschiedener zweiter Wert (E2) für die Materialeigenschaft eines vom ersten abgegrenzten Bereich (6) getrennten zweiten abgegrenzten Bereiches (8) der Komponente (36) festgelegt wird
wobei als erster Wert (E1) bzw. zweiter Wert (E2) für die Materialeigenschaft jeweils ein Wert eines Elastizitätsmoduls festgelegt wird, und für den Elastizitätsmodul der erste Wert (E1) größer als der zweite Wert (E2) festgelegt wird,
wobei die Komponente (36) derart gefertigt wird, dass für den wenigstens ersten abgegrenzten Bereich (6) der gefertigten Komponente (36) die Materialeigenschaft den ersten Wert (E1) aufweist, und für den zweiten abgegrenzten Bereich (8) der gefertigten Komponente (36) die Materialeigenschaft den zweiten Wert (E2) aufweist,
wobei als erster abgegrenzter Bereich (6) der Komponente (36) ein Bereich gefertigt wird, welcher bei einem bestimmungsgemäßen Tragen der Komponente (36) ein im Gehörgang (12) zu tragendes freies Ende bildet, und wobei als zweiter abgegrenzter Bereich (8) der Komponente (36) ein Bereich gefertigt wird, welcher bei einem bestimmungsgemäßen Tragen der Komponente (36) durch den ersten abgegrenzten Bereich (6) vom Trommelfell des Trägers beabstandet ist,
wobei der erste abgegrenzte Bereich (6) und der zweite abgegrenzte Bereich (8) der Komponente (36) mittels eines 3D-Druckverfahrens (38) einstückig gefertigt werden, und wobei der erste Wert (E1) bzw. der zweite Wert (E2) der Materialeigenschaft für den ersten bzw. den zweiten abgegrenzten Bereich (6, 8) über einen entsprechenden Parameter (P1, P2) des 3D-Druckverfahrens eingestellt wird.

2. Verfahren nach Anspruch 1,
wobei der Gehörgang (12) zur Erzeugung der Vermessungsdaten (34) mit optischen und/oder akustischen Mitteln direkt vermessen wird.

3. Verfahren nach Anspruch 1,
wobei zur Erzeugung der Vermessungsdaten (34) ein Abdruck zumindest des Gehörgangs (12) erstellt wird, und die Vermessungsdaten (34) anhand des Abdrucks erzeugt werden.

4. Verfahren nach einem der vorhergehenden Ansprüche,
wobei zur Festlegung der erste Wert (E1) der Materialeigenschaft aus einer Mehrzahl an vorgegebenen Rasterwerten anhand der Vermessungsdaten (34) ausgewählt wird.

5. Verfahren nach einem der vorhergehenden Ansprüche,
wobei anhand der Vermessungsdaten (34) ein vom zweiten Wert (E2) verschiedener dritter Wert für den Elastizitätsmodul eines vom zweiten abgegrenzten Bereich (8) getrennten, dritten abgegrenzten Bereiches (10) der Komponente (36) festgelegt wird, und
wobei die Komponente (36) derart gefertigt wird, dass für den dritten abgegrenzten Bereich (10) der gefertigten Komponente (36) der Elastizitätsmodul den dritten Wert aufweist.

6. Verfahren nach Anspruch 5,
wobei für den Elastizitätsmodul der dritte Wert größer als der zweite Wert (E2) festgelegt wird, und
wobei als dritter abgegrenzter Bereich (10) der Komponente (36) ein Bereich gefertigt wird, welcher ein freies Ende der Komponente (36) bildet.

7. Verfahren nach einem der vorhergehenden Ansprüche,
wobei als Komponente (36) wenigstens ein Teil eines Gehäuses (5) und/oder einer Otoplastik und/oder eines Ohrpassstücks (28) gefertigt wird.

8. Komponente (36) für ein Hörgerät (2, 2'), welche durch ein Verfahren nach einem der vorhergehenden Ansprüche erhältlich ist.

## Claims

1. A method for manufacturing a component (36) of a hearing device (2, 2'), wherein at least one auditory canal (12) of a wearer designated for the hearing device (2, 2') is measured, and measurement data (34) of the auditory canal (12) are generated,
wherein a first value (E1) for a material property of at least a first delimited region (6) of the component (36) is determined on the basis of the measurement data (34),
wherein a second value (E2), for the material property of a second delimited region (8) of the component (36) is determined on the basis of the measurement data (34), said second value (E2) differing from the first value (E1) and said second delimited region (8) being separate from the first delimited region (6),
wherein as a first value (E1) and a second value (E2) for the material property, a respective a value of a modulus of elasticity is determined, and the first value (E1) is determined to be greater than the second value (E2) for the modulus of elasticity,
wherein the component (36) is manufactured in such a way that for the at least first delimited region (6) of the manufactured component (36), the material property has the first value (E1), and for the second delimited region (8) of the manufactured component (36), the material property has the second value (E2),
wherein a region is manufactured as a first delimited region (6) of the component (36) which forms a free end to be worn in the auditory canal (12) when wearing the component (36) as specified for its intended use, and wherein a region is manufactured as a second delimited region (8) of the component (36), which is spaced apart from the eardrum of the wearer by the first delimited region (6) when wearing the component (36) as specified for its intended use,
wherein the first delimited region (6) and the second delimited region (8) of the component (36) are manufactured in one piece by means of a 3D printing process (38), and
wherein the first value (E1) and the second value (E2) of the material property for the first and the second delimited region (6, 8), respectively, is set via a corresponding parameter (P1, P2) of the 3D printing process.

2. The method according to claim 1,
wherein the auditory canal (12) is directly measured by optical and/or acoustic means in order to generate the measurement data (34).

3. The method according to claim 1,
wherein, in order to generate the measurement data (34), a mold of at least the auditory canal (12) is made, and the measurement data (34) are generated on the basis of the mold.

4. The method according to one of the preceding claims,
wherein for its determination, the first value (E1) of the material property is selected from a plurality of predetermined grid values based on the survey data (34).

5. The method according to one of the preceding claims,
wherein a third value for the modulus of elasticity of a third delimited region (10) of the component (36) is determined on the basis of the measurement data (34), said third value being different from the second value (E2) and said third delimited region (10) being separate from the second delimited region (8), and
wherein the component (36) is manufactured in a way such that for the third delimited region (10) of the manufactured component (36), the modulus of elasticity has the third value.

6. The method according to claim 5,
wherein for the modulus of elasticity, the third value is determined to be greater than the second value (E2), and
wherein a region is manufactured as a third delimited region (10) of the component (36) which forms a free end of the component (36).

7. The method according to one of the preceding claims,
wherein at least a part of a housing (5) and/or an earmold and/or an ear fitting (28) is manufactured as said component (36).

8. A component (36) for a hearing device (2, 2'), said component (36) being obtainable by a process according to one of the preceding claims.

## Revendications

1. Procédé de fabrication d'un composant (36) d'une prothèse auditive (2, 2'), dans lequel au moins un conduit auditif (12) d'un porteur prévu pour la prothèse auditive (2, 2') est mesuré et des données de mesure (34) du conduit auditif (12) sont ainsi générées,
dans lequel, sur la base des données de mesure (34), une première valeur (E1) pour une propriété de matériau d'au moins une première région délimitée (6) du composant (36) est déterminée,
dans lequel, sur la base des données de mesure (34), une deuxième valeur (E2) différente de la première valeur (E1) est déterminée pour la propriété de matériau d'une deuxième région délimitée (8) du composant (36) séparée de la première région délimitée (6),
dans lequel en tant que première valeur (E1) ou respectivement deuxième valeur (E2) une valeur d'un module d'élasticité est respectivement déterminée pour la propriété de matériau, et la première valeur (E1) est déterminée comme étant supérieure à la deuxième valeur (E2) pour le module d'élasticité, dans lequel le composant (36) est fabriqué de telle sorte que, pour la au moins première région délimitée (6) du composant fabriqué (36), la propriété de matériau a la première valeur (E1), et pour la deuxième région délimitée (8) du composant fabriqué (36), la propriété de matériau a la deuxième valeur (E2), dans lequel en tant que première région délimitée (6) du composant (36) une région est fabriquée, qui, lorsque le composant (36) est porté comme prévu, forme une extrémité libre à porter dans le conduit auditif (12), et
dans lequel en tant que deuxième région délimitée (8) du composant (36) une région est fabriquée, qui est espacée du tympan du porteur par la première région délimitée (6), lorsque le composant (36) est porté comme prévu,
dans lequel la première région délimitée (6) et la deuxième région délimitée (8) du composant (36) sont fabriquées d'un seul tenant au moyen d'un procédé d'impression 3D (38), et dans lequel la première valeur (E1) ou respectivement la deuxième valeur (E2) de la propriété de matériau pour la première ou respectivement la deuxième région délimitée (6, 8) est réglée par un paramètre correspondant (P1, P2) du procédé d'impression 3D.

2. Procédé selon la revendication 1,
dans lequel, pour générer les données de mesure (34), le conduit auditif (12) est mesuré directement par des moyens optiques et/ou acoustiques.

3. Procédé selon la revendication 1,
dans lequel, pour générer les données de mesure (34), une empreinte d'au moins le conduit auditif (12) est créée, et les données de mesure (34) sont générées à la base de ladite empreinte.

4. Procédé selon l'une des revendications précédentes,
dans lequel, pour déterminer la première valeur (E1) de la propriété de matériau, est sélectionnée parmi une pluralité de valeurs de trame prédéterminées sur la base des données de mesure (34).

5. Procédé selon l'une des revendications précédentes,
dans lequel, sur la base des données de mesure (34), une troisième valeur, différente de la deuxième valeur (E2), est déterminée pour le module d'élasticité d'une troisième région délimitée (10) du composant (36), séparée de la deuxième région délimitée (8), et
dans lequel le composant (36) est fabriqué de telle sorte que, pour la troisième région délimitée (10) du composant (36) fabriqué, le module d'élasticité a la troisième valeur.

6. Procédé selon la revendication 5,
dans lequel la troisième valeur du module d'élasticité est supérieure à la deuxième valeur (E2), et
dans lequel en tant que troisième région délimitée (10) du composant (36) une région est fabriquée, qui forme une extrémité libre du composant (36).

7. Procédé selon l'une des revendications précédentes,
dans lequel en tant que composant (36).au moins une partie d'un boîtier (5) et/ou d'un otoplastique et/ou d'un embout d'oreille (28) est fabriquée.

8. Composant (36) pour une prothèse auditive (2, 2'), qui peut être obtenu par un procédé selon l'une des revendications précédentes.
